# EUROPEAN PATENT APPLICATION

(11) **EP 2 323 209 A1**
(43) Date of publication of application: **18.05.2011**
(21) Application number: 09804734.3
(22) Date of filing: 05.08.2009
(51) Int. Cl.: H01M 8/24

(54) **FUEL CELL STACK AND FUEL CELL SYSTEM EMPLOYING THE SAME**

(30) Priority: 07.08.2008 JP 2008203982
(71) Applicant: Panasonic Corporation, Kadoma-shi Osaka 571-8501 (JP)
(72) Inventor: KOZU, Katsumi, Osaka-shi, Osaka 540-6207 (JP); KIMURA, tADAO, Osaka-shi, Osaka 540-6207 (JP)
(74) Representative: Schwabe - Sandmair - Marx
(86) International application number: PCT/JP2009/003735
(87) International publication number: WO 2010/016247

(57) **Abstract**

A fuel cell stack formed by laminating thin end plates, separators, and the like, includes a first side surface and a second side surface parallel to the laminating direction. An anode side end plate has a plane portion on a first side surface. The dimension in the laminating direction of the plane portion is larger than a thickness of one of the end plates in a portion where the end plates sandwich a membrane electrode assembly. The plane portion is provided with a fuel inlet port for taking in fuel from the outside.

## Description

### TECHNICAL FIELD

The present invention relates to a fuel cell stack and a fuel cell system using the same. More particularly, it relates to a structure for supplying fuel and an oxidizing agent to a fuel cell stack.

### BACKGROUND ART

Recently, with the rapid widespread of portable and cordless electronic devices, as driving power sources for such devices, small, lightweight and large energy density secondary batteries have been increasingly demanded. Furthermore, technology development has been accelerated in not only secondary batteries used for small consumer goods but also large secondary batteries for electric power storages and electric vehicles, which require long-time durability and safety. Furthermore, much attention has been paid to fuel cells enabling long-time continuous use with fuel supplied, rather than secondary batteries that need charging.

A fuel cell system includes a fuel cell stack including a cell stack, a fuel supply section for supplying fuel to the cell stack, and an oxidizing agent supply section for supplying an oxidizing agent to the cell stack. The cell stack is formed by laminating a membrane electrode assembly that includes an anode electrode, a cathode electrode, and an electrolyte membrane interposed between the anode and cathode electrodes, and a separator onto each other, and disposing end plates on the both end sides in the laminating direction.

In general, end plates and separators have holes penetrating in the thickness direction. When a cell stack is formed, the holes coincide with each other to form flow passages for fuel and an oxidizing agent. Then, the flow passages are connected to a fuel supply port and an oxidizing agent supply port provided on backing plates disposed outside the end plates (for example, Patent Document 1).

However, in this structure, in order to form flow passages for fuel and an oxidizing agent, it is necessary to laminate the end plates, the separators and the backing plates precisely. Furthermore, since it is necessary to increase the size of the end plate and separator by the size of the flow passage, the size of the cell stack is increased.

Meanwhile, a fuel cell stack, in which fuel and an oxidizing agent are supplied from a side surface parallel to the laminating direction, is proposed (for example, Patent Document 2). This fuel cell stack is formed by combining two unit cells to form a module and electrically connecting the modules. In each unit cell, a fuel supply port is provided on the side surface of the end plate at the anode side, and a through hole penetrating from the fuel supply port to a flow passage groove formed on the surface facing the anode electrode is provided. Thus, fuel can be supplied from the side surface parallel to the laminating direction, thus reducing the size of the fuel cell stack in the planer direction.

However, Patent Document 2 does not disclose a seal structure of a connection portion between a fuel supply port and a device such as a pump for supplying fuel to the fuel cell stack in detail. Since fuel such as methanol has toxicity, tight sealing is required. However, when the end plate is made to be thin, the size of the fuel supply port is also reduced. Therefore, it is difficult to carry out connection while a fuel leakage is prevented.

Furthermore, according to Patent Document 2, fuel supply ports of unit cells in the module are joined into one port, to which a fuel is supplied uniformly. However, in cells, there is variation in electromotive force or a pressure loss of the flow passage, it is preferable that a flow rate is controlled for every unit cell. On the contrary, it is not possible to control the fuel flow rate for every unit cell in the above-mentioned fuel supply method.

### Prior Art Document

### Patent Document

Patent Document 1: Japanese Patent Unexamined Publication No. 2005-317310
Patent Document 2: Japanese Patent Unexamined Publication No. 2006-351525

### SUMMARY OF THE INVENTION

The present invention provides a fuel cell stack having a structure capable of being connected to a fuel pump reliably even in the case where a thin end plate and a separator are used and fuel is supplied from the side surface parallel to the laminating direction.

The fuel cell stack of the present invention includes a membrane electrode assembly, and a pair of end plates. The membrane electrode assembly and the end plates constitute a unit cell of fuel cell. The membrane electrode assembly is formed by laminating an anode electrode, a cathode electrode, and an electrolyte membrane interposed between the anode and cathode electrodes. The end plates are disposed so as to sandwich the membrane electrode assembly from both sides in the laminating direction of the membrane electrode assembly. The fuel cell stack has a first side surface and a second side surface which are parallel to the laminating direction. An anode side end plate has a first plane portion on the first side surface. The dimension in the laminating direction of the first plane portion is made to be larger than a thickness of the anode side end plate in a portion where the membrane electrode assembly is sandwiched. The first plane portion is provided with a first fuel inlet port for taking in fuel from the outside. The cathode side end plate has a first gas inlet port on the second side surface. The first gas inlet port is configured to take in a gas containing an oxidizing agent from the outside

In this fuel cell stack, the first fuel inlet port is provided on the first plane portion. Thereby, even in the case where thin end plates are used, the fuel cell stack can be connected to the fuel supply section (fuel pump) by carrying out reliable sealing with the use of the first plane portion. Thus, it is possible to prevent fuel from leaking. In this way, it is possible to secure the sealing in a connection portion that supplies fuel from the fuel supply section to the fuel cell stack.

### BRIEF DESCRIPTION OF THE DRAWINGS

Fig. 1 is a block diagram showing a configuration of a fuel cell system in accordance with an exemplary embodiment of the present invention.
Fig. 2A is a perspective view showing a fuel cell stack in accordance with the exemplary embodiment of the present invention.
Fig. 2B is a perspective view showing an opposite side of the fuel cell stack of Fig. 2A in accordance with the exemplary embodiment of the present invention.
Fig. 3 is an enlarged sectional view showing a fuel supplying side of the fuel cell stack shown in Fig. 2A.
Fig. 4 is a plan view showing a surface facing an anode electrode, of a separator of the fuel cell stack shown in Fig. 2A.
Fig. 5 is an enlarged sectional view showing an air supplying side of the fuel cell stack shown in Fig. 2B.
Fig. 6 is a plan view showing a surface facing a cathode electrode, of the separator of the fuel cell stack shown in Fig. 2B.
Fig. 7 is a conceptual sectional view showing a schematic configuration of a principal part of the fuel cell stack shown in Fig. 2A.
Fig. 8 is a perspective view for illustrating a connection between the fuel cell stack shown in Fig. 2B and a fuel pump shown in Fig. 1.
Fig. 9 is a perspective view for illustrating a connection between the fuel cell stack shown in Fig. 2B and an air pump shown in Fig. 1.
Fig. 10 is a front view showing a second side surface of the fuel cell stack shown in Fig. 2B.
Fig. 11 is a sectional view showing an integrated member attached to the second side surface of the fuel cell stack shown in Fig. 2B.

### DETAILED DESCRIPTION OF THE PREFERRED EMBODIMENT

Hereinafter, an exemplary embodiment of the present invention is described with reference to drawings in which a direct methanol fuel cell (DMFC) is taken as an example. Note here that the present invention is not limited to the embodiment mentioned below as long as it is based on the basic features described in the description.

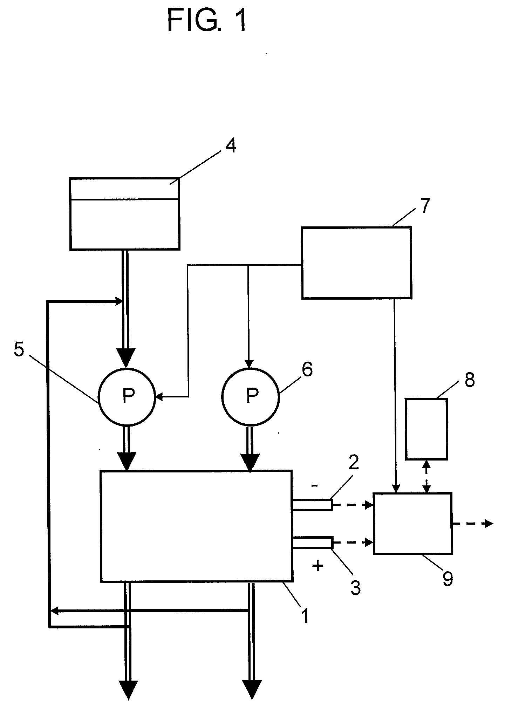

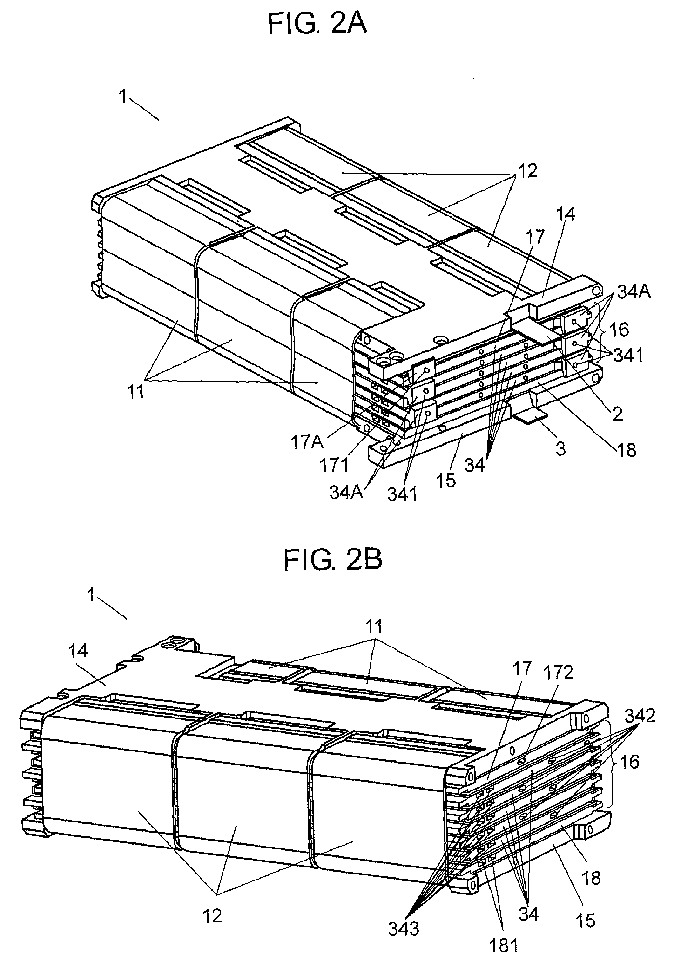

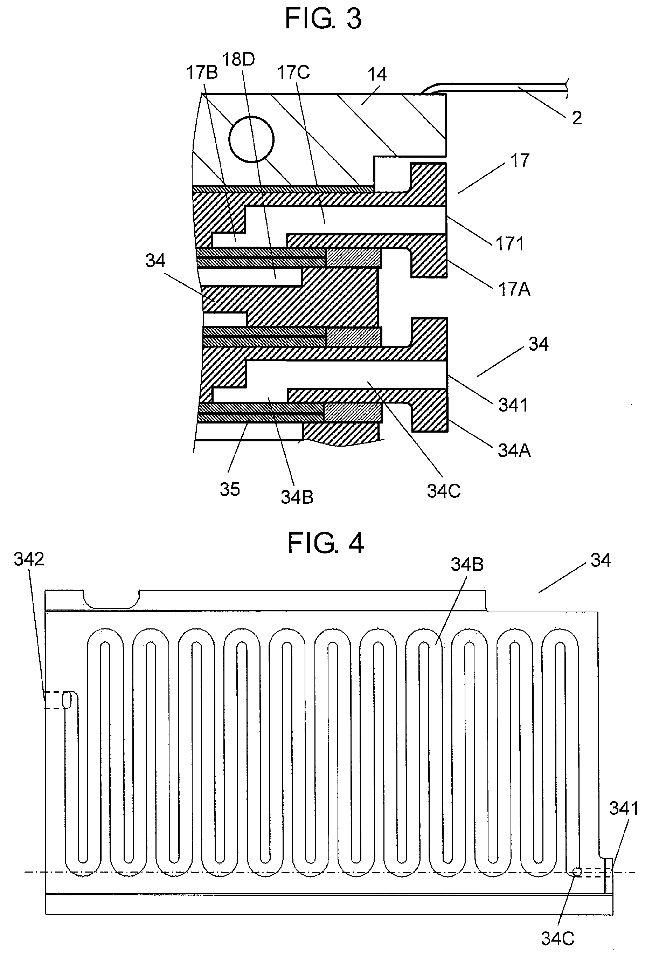

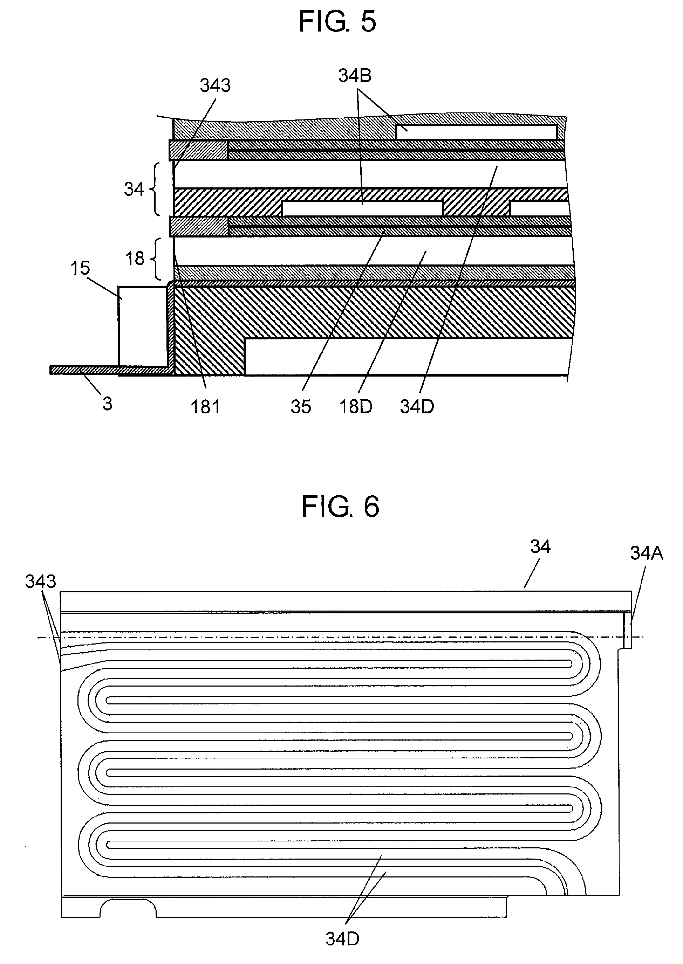

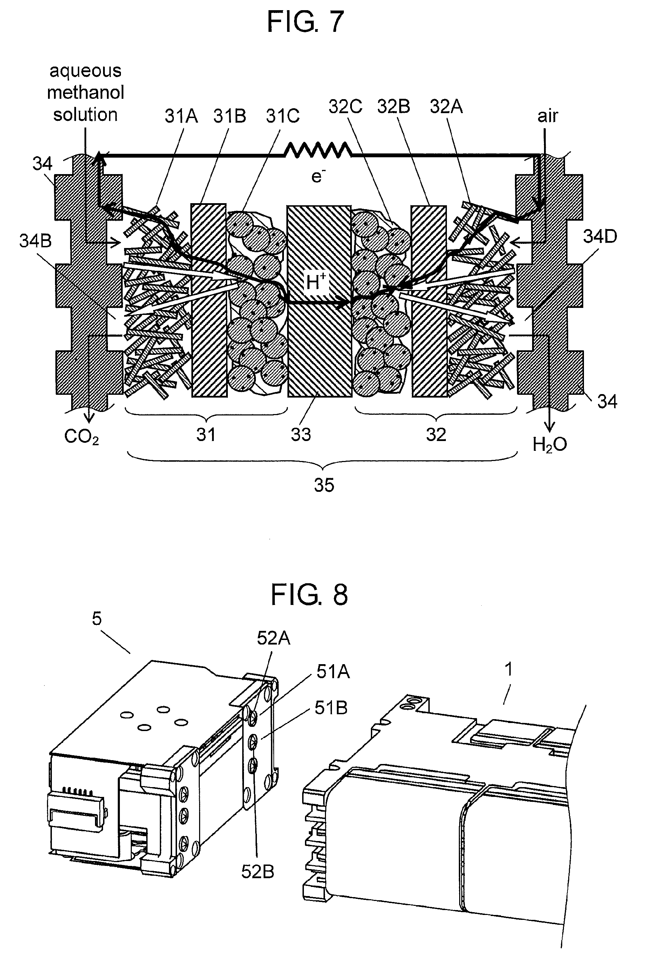

Fig. 1 is a block diagram showing a configuration of a fuel cell system in accordance with an exemplary embodiment of the present invention. Figs. 2A and 2B are perspective views showing a fuel cell stack in accordance with the exemplary embodiment of the present invention. Fig. 3 is an enlarged sectional view showing a fuel supplying side of the fuel cell stack shown in Fig. 2A. Fig. 4 is a plan view showing a surface facing an anode electrode, of a separator of the fuel cell stack. Fig. 5 is an enlarged sectional view showing an air supplying side of the fuel cell stack. Fig. 6 is a plan view showing a surface facing a cathode electrode, of the separator of the fuel cell stack. Fig. 7 is a conceptual sectional view showing a schematic configuration of a principal part of the fuel cell stack.

The fuel cell system includes fuel cell stack 1, fuel tank 4, fuel pump 5, air pump 6, controller 7, storage section 8, and DC/DC converter 9. Fuel cell stack 1 has an electricity generation section. The generated electric power is output from anode terminal 3 of the negative electrode and cathode terminal 2 of the positive electrode. The output electric power is input into DC/DC converter 9. Fuel pump 5 supplies fuel in fuel tank 4 to anode electrode 31 of fuel cell stack 1. Air pump 6 supplies air as an oxidizing agent to cathode electrode 32 of fuel cell stack 1. Controller 7 controls the driving of fuel pump 5 and air pump 6, and controls DC/DC converter 9 so as to control the output to the outside and the charge and discharge to storage section 8. Fuel tank 4, fuel pump 5 and controller 7 constitute a fuel supply section that supplies fuel to anode electrode 31 in fuel cell stack 1. On the other hand, air pump 6 and controller 7 constitute a gas supply section that supplies a gas containing oxygen as an oxidizing agent to cathode electrode 32 in fuel cell stack 1.

As shown in Fig. 7, anode electrode 31 is supplied with a methanol aqueous solution as fuel, and cathode electrode 32 is supplied with air. Note here that the configurations of the fuel supply section and the gas supply section are not particularly limited to the above-mentioned configurations.

As shown in Fig. 2A, fuel cell stack 1 includes cell stack 16, backing plates 14 and 15, first plate spring 11 and second plate spring 12. Cell stack 16 includes membrane electrode assemblies (MEAs) 35 as the electricity generation sections and separators 34 disposed so as to sandwich MEA 35 shown in Fig. 7, and a pair of end plates 17 and 18. End plates 17 and 18 sandwich MEAs 35 and separators 34 from both sides in the laminating direction of MEAs 35, that is, from both sides in the laminating direction of MEAs 35 and separators 34. As shown in Fig. 7, MEA 35 is formed by laminating anode electrode 31, cathode electrode 32, and electrolyte membrane 33 interposed between anode electrode 31 and cathode electrode 32.

Anode electrode 31 includes diffusion layer 31A, microporous layer (MPL) 31B and catalyst layer 31C, which are laminated from the separator 34 side in this order. Cathode electrode 32 also includes diffusion layer 32A, microporous layer (MPL) 32B and catalyst layer 32C, which are laminated sequentially from the separator 34 side. Anode terminal 3 is electrically connected to anode electrode 31 and cathode terminal 2 is electrically connected to cathode electrode 32, respectively. Diffusion layers 31A and 32A are made of, for example, carbon paper, carbon felt, carbon cloth, and the like. MPLs 31B and 32B are made of, for example, polytetrafluoroethylene or a tetrafluoroethylene - hexafluoropropylene copolymer, and carbon. Catalyst layers 31C and 32C are formed by highly diffusing a catalyst such as platinum and ruthenium suitable for each electrode reaction onto a carbon surface and by binding those catalysts with a binder. Electrolyte membrane 33 is formed of an ion-exchange membrane which allows a hydrogen ion to permeate itself, for example, a perfluorosulfonic acid - tetrafluoroethylene copolymer.

End plates 17 and 18 and separator 34 are made of a carbon material or stainless steel. As shown in Figs. 3, 4, and 7, fuel flow passage groove 34B for feeding fuel to anode electrode 31 is provided on the surface facing anode electrode 31 of separator 34. On the other hand, as shown in Figs. 5, 6, and 7, air flow passage groove 34D for feeding air to cathode electrode 32 is provided on the surface facing cathode electrode 32 of separator 34.

As shown in Fig. 3, on the outer side with respect to MEA 35 on separator 34, plane portion (second plane portion) 34A is provided. That is to say, plane portion 34A is provided on a first side surface of cell stack 16, which is parallel to the laminating direction and is not fastened by first plate spring 11 and second plate spring 12. The dimension in the laminating direction of plane portion 34A is larger than the thickness of separator 34 in a portion where separators 34 sandwich MEA 35 or separator 34 and end plate 17 sandwich MEA 35. Plane portion 34A is provided with fuel inlet port (second fuel inlet port) 341 for taking in fuel from the outside. Through hole 34C is provided so as to communicate fuel inlet port 341 with fuel flow passage groove 34B. On the other hand, as shown in Fig. 5, on the second side surface parallel to the laminating direction of cell stack 16, gas inlet port (second gas inlet port) 343 for taking in air from the outside is provided. The second side surface faces the first side surface and is not fastened by first plate spring 11 and second plate spring 12.

Note here that the opposite side to fuel inlet port 341 of fuel flow passage groove 34B communicates with fuel outlet port (second fuel outlet port) 342 for exhausting at least any of reaction product of the fuel and reaction residue of the fuel as shown in Fig. 4. As mentioned below, gas inlet port 343 and fuel outlet port 342 are provided on the above-mentioned second side surface.

Note here that fuel flow passage groove 17B is also provided on anode side end plate 17 facing anode electrode 31, and air flow passage groove 18D for feeding air is also provided at the cathode side end plate 18 facing cathode electrode 32. Fuel flow passage groove 17B is formed in the same shape as that of fuel flow passage groove 34B, and air flow passage groove 18D is formed in the same shape as that of air flow passage groove 34D. Furthermore, plane portion (first plane portion) 17A provided with fuel inlet port (first fuel inlet port) 171 is formed on end plate 17, and fuel flow passage groove 17B communicates with fuel inlet port 171 via through hole 17C. Gas inlet port (first gas inlet port) 181 for taking in air from the outside is provided on the second side surface parallel to the laminating direction of cell stack 16.

Backing plate 14 is disposed at the anode electrode 31 side in cell stack 16, and backing plate 15 is disposed at the cathode electrode 32 side. Backing plates 14 and 15 are made of insulating resin, ceramic, resin containing a glass fiber, a metal plate coated with an electrically-insulating membrane, or the like.

First plate spring 11 and second plate spring 12 tighten cell stack 16 with the spring elastic force thereof via backing plates 14 and 15. Second plate spring 12 is disposed so as to face first plate spring 11. First plate spring 11 and second plate spring 12 are made of, for example, a spring steel material.

Next, an operation in fuel cell stack 1 is briefly described. As shown in Figs. 1 and 7, anode electrode 31 is supplied with an aqueous solution containing methanol by fuel pump 5. On the other hand, cathode electrode 32 is supplied with air compressed by air pump 6. A methanol aqueous solution as a fuel supplied to anode electrode 31, and methanol and water vapor derived from the methanol aqueous solution are diffused in diffusion layer 31A to the entire surface of MPL 31B. Then, they pass through MPL 31B and reach catalyst layer 31C.

On the other hand, oxygen contained in the air supplied to cathode electrode 32 is diffused in diffusion layer 32A to the entire surface of MPL 32B. The oxygen further passes through MPL 32B and reaches catalyst layer 32C. Methanol that reaches catalyst layer 31C reacts as in formula (1), and oxygen that reaches catalyst layer 32C reacts as in formula (2).

CH₃OH + H₂O→ CO₂ + 6H⁺ + 6e⁻ (1)

3/2O₂ + 6H⁺ + 6e⁻ → 3H₂O (2)

As a result, electric power is generated, as well as carbon dioxide is generated at the anode electrode 31 side and water is generated at the cathode electrode 32 side as reaction products, respectively. Carbon dioxide is exhausted to the outside of fuel cell stack 1. Gases such as nitrogen that do not react in cathode electrode 32 and unreacted oxygen are also exhausted to the outside of fuel cell stack 1. Note here that since not all methanol in the aqueous solution react at the anode electrode 31 side, the exhausted aqueous solution is generally allowed to return to fuel pump 5 as shown in Fig. 1. Furthermore, since water is consumed in the reaction in anode electrode 31, water generated in cathode electrode 32 may be allowed to return to the anode electrode 31 side as shown in Fig. 1.

In the exemplary embodiment, cell stack 16 is fastened by first plate spring 11 and second plate spring 12 via backing plates 14 and 15. First plate spring 11 and second plate spring 12 fasten cell stack 16 extremely compactly along the outer shape of cell stack 16 as shown in Fig. 3. That is to say, dead space is extremely small on the side surface of cell stack 16, and fuel cell stack 1 can be reduced in size as compared with a conventional case in which a cell stack is fastened by bolts and nuts.

Furthermore, in a case in which a cell stack is fastened by using bolts and nuts, a pressing point is provided at the outside (in the vicinity of the outer periphery) of cell stack 16. However, first plate spring 11 and second plate spring 12 have a pressing point in a relatively central portion in cell stack 16. Therefore, pressing power is operated in cell stack 16 uniformly in the planar direction of backing plates 14 and 15. With such a pressing power, entire cell stack 16 can be fastened uniformly. Thus, the electrochemical reactions expressed by the formulae (1) and (2) proceed uniformly in the planar direction of MEA 35. As a result, current-voltage characteristics offuel cell stack 1 are improved.

Next, the connection between fuel cell stack 1 and fuel pump 5 is described with reference to Figs. 2A and 8. Fig. 8 is a perspective view for illustrating the connection between fuel cell stack 1 and fuel pump 5.

As shown in Fig. 2A, plane portions 17A and 34A are formed on the side surface to be connected to fuel pump 5. In fuel pump 5, fuel discharging section (first fuel discharging section) 51A is provided on a position corresponding to plane portion 17A, and fuel discharging section (second fuel discharging section) 51B is provided on a position corresponding to plane portion 34A. On fuel discharging section 51A, seal member (first seal member) 52A is disposed. Similarly, on fuel discharging section 51B, seal member (second seal member) 52B is disposed. Seal members 52A and 52B are formed smaller in size than plane portions 17A and 34A, respectively. Then, fuel inlet port 171 and fuel discharging section 51A are allowed to face each other, and fuel inlet port 341 and fuel discharging section 51B are allowed to face each other. Furthermore, fuel pump 5 and fuel cell stack 1 are fastened by, for example, a bolt so that seal members 52A and 52B are compressed by plane portions 17A and 34A. Thereby, a fuel passage is sealed. In particular, by using seal members 52A and 52B that are smaller in size than plane portions 17A and 34A, seal members 52A and 52B can connect fuel discharging sections 51A and 51B to fuel inlet ports 171 and 341 between seal members 52A and 52B and plane portions 17A and 34A without leakage.

With this structure, even if thin end plate 17 and separator 34 are used, the fuel cell stack can be connected to fuel pump 5 with securely sealing by the use of plane portions 17A and 34A. This makes it possible to prevent fuel from leaking at the connection portion.

Note here that as shown in Fig. 2A, it is preferable that plane portion 17A and plane portion 34A of separator 34 adjacent to end plate 17 are displaced from each other in the direction perpendicular to the laminating direction. Furthermore, when three or more MEAs 35 and two or more separators 34 are laminated, it is preferable that plane portions 34A are displaced from each other in the direction perpendicular to the laminating direction.

In Fig. 2A, plane portions 17A and 34A are provided at different positions from each other in laminating order. In such a position relation, plane portion 17A and plane portion 34A, or plane portions 34A are not brought into contact with each other. Therefore, it is possible to prevent short circuit in cell stack 16. Furthermore, the degree of freedom in disposing fuel discharging sections 51A and 51B is obtained.

Furthermore, it is further preferable that plane portion 17A and plane portion 34A or plane portions 34A are provided on the same plane. By providing plane portion 17A and plane portion 34A on the same plane in which they are displaced from each other in the direction perpendicular to the laminating direction, fuel discharging sections 51A and 51B may be provided on the same plane. Thus, in fuel pump 5, when fuel discharging sections 51A and 51B are formed on the same plane, they can be sealed with respect to plane portions 17A and 34A, reliably.

Furthermore, it is preferable that fuel pump 5 is capable of individually controlling the flow rates of fuel discharged from fuel discharging sections 51A and 51B, respectively. By using such a fuel pump 5, it is possible to supply fuel at an optimum flow rate to each unit cell. In a unit cell, since there is a variation in the electromotive force and/or the pressure loss of flow passage, it is preferable that the flow rate of the fuel is controlled for each unit cell.

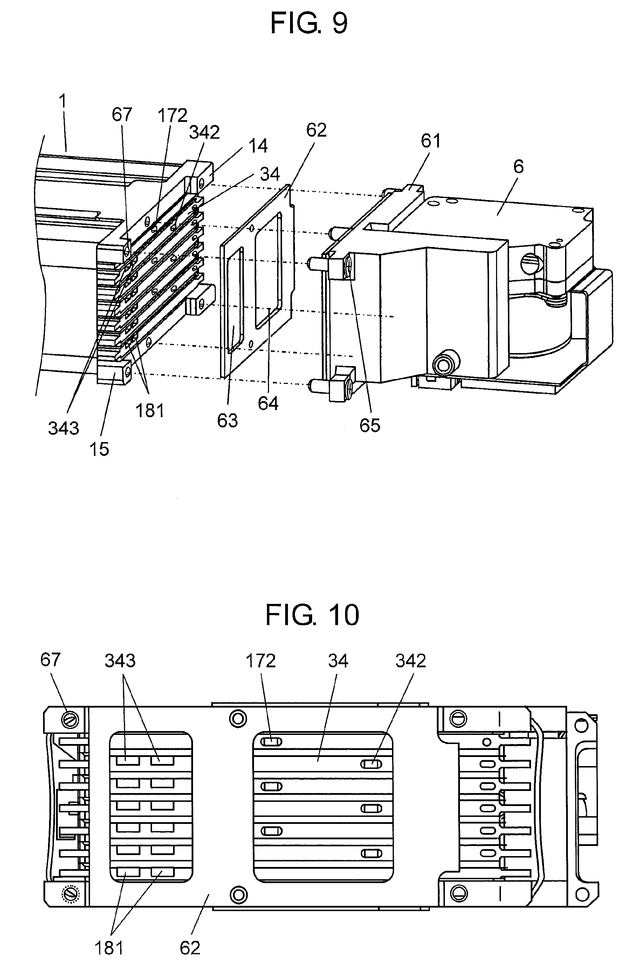

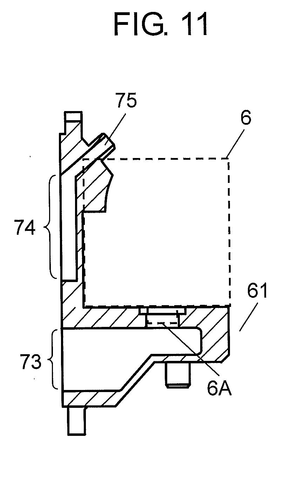

Next, the connection between fuel cell stack 1 and air pump 6 is described with reference to Figs. 2B and 9 through 11. Fig. 9 is a perspective view for illustrating the connection between fuel cell stack 1 and air pump 6. Fig. 10 is a front view showing a second side surface of fuel cell stack 1. Fig. 11 is a sectional view showing integrated member 61 to be attached to the second side surface.

Air pump 6 constituting a gas supply section has gas discharging section 6A as shown in Fig. 11 and is attached to integrated member 61 by, for example, a screw as shown in Fig. 9. Integrated member 61 includes gas discharging section 73, receiver section 74, and exhaust pipe 75. Gas discharging section 6A communicates with gas discharging section 73 of integrated member 61. Receiver section 74 is formed so that integrated member 61 receives exhaust from fuel outlet ports 172 and 342. Furthermore, receiver section 74 communicates with exhaust pipe 75. In this way, integrated member 61 is formed by integrating gas discharging section 73 and receiver section 74 receiving exhaust from fuel outlet ports 172 and 342.

On the other hand, seal member (third seal member) 62 is attached to the second side surface provided with gas inlet ports 181 and 343 and fuel outlet ports 172 and 342 of cell stack 16 as shown in Figs. 9 and 10. Seal member 62 has opening 63 in the position corresponding to gas inlet ports 181 and 343, and opening 64 in the position corresponding to fuel outlet ports 172 and 342.

Integrated member 61 is attached to fuel cell stack 1 with seal member 62 sandwiched therebetween by screwing screws 65 into screw holes 67 provided on backing plates 14 and 15. In this state, seal member 62 separates gas inlet ports 181 and 343 from fuel outlet ports 172 and 342. Furthermore, seal member 62 connects gas discharging section 73 with gas inlet ports 181 and 343. Therefore, air sent from air pump 6 is supplied to gas inlet ports 181 and 343. Furthermore, seal member 62 connects receiver section 74 with fuel outlet ports 172 and 342.

By using integrated member 61 and seal member 62 in this way, an air introducing passage and a fuel side exhaust passage can be formed in compact in size on the second side surface. As a result, a fuel cell system can be miniaturized.

In the above description, a configuration in which fuel inlet ports 171 and 341 are provided on the first side surface of fuel cell stack 1 and gas inlet ports 181 and 343 are provided on the second side surface is described. However, the present invention is not limited to this configuration. Fuel inlet ports 171 and 341 and gas inlet ports 181 and 343 may be formed on the same side surface. For example, in the case where an elongated fuel cell stack is used, fuel inlet ports 171 and 341 and gas inlet ports 181 and 343 can be provided on one surface. Also in this case, when plane portions 17A and 34A are provided, fuel can be prevented from leaking.

Furthermore, a configuration is described in which a plurality of MEAs 35 are laminated with separator 34 disposed between MEAs 35, end plates 17 and 18 are disposed on both sides in the laminating direction so as to form cell stack 16, and backing plates 14 and 15 are further disposed on the outside end plates 17 and 18. However, the present invention is not limited to this configuration. A single MEA 35 may be sandwiched by end plates 17 and 18 from the both sides in the laminating direction, and MEA 35 and end plates 17 and 18 may be fastened in the laminating direction by only first plate spring 11. In this case, it is preferable that first plate spring 11 is arranged so as to press the vicinity of the center part of end plates 17 and 18. Needless to say, in this configuration, second plate spring 12 may further be used. Furthermore, in Fig. 2A, a plurality of first plate springs 11 and second plate springs 12 are used. However, one first plate spring 11 and one second plate spring 12 may be used depending upon the size of cell stack 16. Thus, the subject to be pressed may be a single cell or a cell stack. One plate spring may be used and a plurality of or a pair of or a plural pairs of plate springs may be used.

Furthermore, without using backing plates 14 and 15, end plates 17 and 18 may be directly sandwiched by first plate spring 11 (and second plate spring 12). In this case, an insulating film is formed inside the C-shaped cross section of first plate spring 11 (and second plate spring 12) so that first plate spring 11 does not cause short circuit. Furthermore, fastening section (for example, screw hole 67) to fuel pump 5 and integrated member 61 are provided on end plates 17 and 18. That is to say, backing plates 14 and 15 are not essential.

However, it is preferable that backing plates 14 and 15 are provided and that backing plates 14 and 15 are formed of different materials from those of end plates 17 and 18. Thus, it is possible to optimize backing plates 14 and 15 that directly receive a pressing force of first plate spring 11 and end plates 17 and 18 that also function as flow passages of fuels and air. For example, by adding backing plates 14 and 15 to end plates 17 and 18, it is possible to suppress the deformation of backing plates 14 and 15 due to the pressing force of first plate spring 11. As a result, a unit cell of fuel cell or a cell stack can be fastened more uniformly in the planner direction of MEA 35. Furthermore, since backing plates 14 and 15 are formed of an insulating material, it is not necessary to consider short circuit due to arm sections of first plate spring 11.

Note here that in this exemplary embodiment, cell stack 16 is fastened by using first plate spring 11 and second plate spring 12, and fuel and air are supplied from the side surfaces that are opposite each other and are not fastened by first plate spring 11 and second plate spring 12. However, the present invention is not limited to this configuration. When second plate spring 12 is not used, a side surface, which is covered with second plate spring 12 in this exemplary embodiment, may be used for supplying fuel and air. Furthermore, when a pair of backing plates are fastened by, for example, a bolt, without using first plate spring 11 and second plate spring 12, any side surfaces may be used for supplying fuel and air.

In the exemplary embodiment, DMFC is described as an example. However, the configuration of the present invention can be applied to any fuel cells using a power generation element that is the same as cell stack 16. For example, it may be applied to a so-called polymer solid electrolyte fuel cell and a methanol modified fuel cell, which use hydrogen as fuel.

### INDUSTRIAL APPLICABILITY

A fuel cell stack of the present invention is provided with plane portions on end plates and separators and these plane portions are disposed on the stack side surface. Furthermore, a fuel inlet port is provided on each of the plane portions. Then, in a fuel cell system of the present invention, a fuel discharging section of a fuel pump and a fuel inlet port are connected water-tightly to each other by using the plane portions. Thus, fuel can be prevented from leaking. Such a fuel cell stack and the fuel cell system using the fuel cell stack are particularly useful as a power source of small electronic devices.

### REFERENCE MARKS IN THE DRAWINGS

- 1: fuel cell stack
- 2: cathode terminal
- 3: anode terminal
- 4: fuel tank
- 5: fuel pump
- 6: air pump
- 6A, 73: gas discharging section
- 7: controller
- 8: storage section
- 9: DC/DC converter
- 11: first plate spring
- 12: second plate spring
- 14, 15: backing plate
- 16: cell stack
- 17, 18: end plate
- 17A: plane portion (first plane portion)
- 17B, 34B: fuel flow passage groove
- 17C, 34C: through hole
- 18D, 34D: air flow passage groove
- 31: anode electrode
- 31A, 32A: diffusion layer
- 31B, 32B: microporous layer (MPL)
- 31C, 32C: catalyst layer
- 32: cathode electrode
- 33: electrolyte film
- 34: separator
- 34A: plane portion (second plane portion)
- 35: membrane electrode assembly (MEA)
- 51A: fuel discharging section (first fuel discharging section)
- 51B: fuel discharging section (second fuel discharging section)
- 52A: seal member (first seal member)
- 52B: seal member (second seal member)
- 61: integrated member
- 62: seal member (third seal member)
- 63, 64: opening
- 65: screw
- 67: screw hole
- 74: receiver section
- 75: exhaust pipe
- 171: fuel inlet port (first fuel inlet port)
- 172: fuel outlet port (first fuel outlet port)
- 181: gas inlet port (first gas inlet port)
- 341: fuel inlet port (second fuel inlet port)
- 342: fuel outlet port (second fuel outlet port)
- 343: gas inlet port (second gas inlet port)

## Claims

1. A fuel cell stack comprising:
a membrane electrode assembly formed by laminating an anode electrode, a cathode electrode, an electrolyte membrane interposed between the anode electrode and the cathode electrode onto each other; and
an anode side end plate and a cathode side end plate sandwiching the membrane electrode assembly from both sides in a laminating direction of the membrane electrode assembly,
wherein the fuel cell stack has a first side surface parallel to the laminating direction,
the anode side end plate has a first plane portion on the first side surface, the first plane portion is formed larger in the laminating direction than a thickness of a portion in which the anode side end plate sandwiches the membrane electrode assembly, and
the first plane portion is provided with a first fuel inlet port for taking in fuel from outside.

2. The fuel cell stack according to claim 1,
wherein the fuel cell stack further comprises a second side surface that is different from the first side surface and is provided in parallel to the laminating direction, and
the cathode side end plate has a first gas inlet port configured to take in a gas containing an oxidizing agent from outside, on the second side surface.

3. The fuel cell stack according to claim 2,
wherein the membrane electrode assembly is one of membrane electrode assemblies, the fuel cell stack comprises the membrane electrode assemblies, and a separator is provided between each two of the membrane electrode assemblies to form a cell stack, and
the separator has a second gas inlet port configured to take in the gas from outside on the second side surface so as to correspond to the cathode electrode of each of the membrane electrode assemblies.

4. The fuel cell stack according to claim 1,
wherein the membrane electrode assembly is one of membrane electrode assemblies, the fuel cell stack comprises the membrane electrode assemblies, and a separator is provided between each two of the membrane electrode assemblies to form a cell stack, and
the separator has a second plane portion formed larger in the laminating direction than a thickness of a portion in which the separator is sandwiched by the membrane electrode assemblies on the first side surface so as to correspond to the anode electrode of each of the membrane electrode assemblies, and
the second plane portion is provided with a second fuel inlet port configured to take in the fuel from outside.

5. The fuel cell stack according to claim 4,
wherein the first plane portion and the second plane portion of the separator adjacent to the end plate are provided such that they are displaced from each other in a direction perpendicular to the laminating direction.

6. The fuel cell stack according to claim 5,
wherein the first plane portion and the second plane portion are provided on a same plane.

7. The fuel cell stack according to claim 4,
wherein the membrane electrode assembly is one of three or more membrane electrode assemblies, the fuel cell stack comprises the three or more membrane electrode assemblies,
the separator is one of two or more separators, the fuel cell stack comprises the two or more separators, and
the second plane portions are provided such that they are displaced from each other in the direction perpendicular to the laminating direction.

8. The fuel cell stack according to claim 7,
wherein the first plane portion and the second plane portions are provided on a same plane.

9. A fuel cell system comprising:
the fuel cell stack according to claim 1; and
a fuel supply section having a first fuel discharging section in a position corresponding to the first plane portion and being configured to supply the fuel to the first fuel inlet port,
wherein the fuel supply section has a first seal member smaller than the first plane portion at the first fuel discharging section.

10. The fuel cell system according to claim 9,
wherein the membrane electrode assembly is one of membrane electrode assemblies, the fuel cell stack comprises the membrane electrode assemblies, and a separator is provided between each two of the membrane electrode assemblies to form a cell stack,
the separator has a second plane portion formed larger in the laminating direction than a thickness of a portion in which the separator is sandwiched by the membrane electrode assemblies on the first side surface so as to correspond to the anode electrode of each of the membrane electrode assemblies, and the second plane portion is provided with a second fuel inlet port configured to take in the fuel from outside,
the fuel supply section further comprises a second fuel discharging section in a position corresponding to the second plane portion and is configured to supply the fuel to the first fuel inlet port and the second fuel inlet port, and
the fuel supply section further comprises a second seal member that is smaller than the second plane portion in the second fuel discharging section.

11. The fuel cell system according to claim 9,
wherein the membrane electrode assembly is one of membrane electrode assemblies, the fuel cell stack comprises the membrane electrode assemblies, and a separator is provided between each two of the membrane electrode assemblies to form a cell stack,
the separator has a second plane portion formed larger in the laminating direction than a thickness of a portion in which the separator is sandwiched by the membrane electrode assemblies on the first side surface so as to correspond to the anode electrode of each of the membrane electrode assemblies, and the second plane portion is provided with a second fuel inlet port configured to take in the fuel from outside,
the fuel supply section further comprises a second fuel discharging section in a position corresponding to the second plane portion and is configured to supply the fuel to the first fuel inlet port and the second fuel inlet port, and
the fuel supply section is capable of separately controlling a flow rate of the fuel discharged respectively from the first fuel discharging section and the second fuel discharging section.

12. A fuel cell system comprising:
the fuel cell stack according to claim 1;
a fuel supply section configured to supply the fuel to the first fuel inlet port, and
a gas supply section having a gas discharging section, the gas supply section being configured to supply the gas to the first gas inlet port,
wherein the fuel cell stack further comprises a second side surface that is different from the first side surface and is provided in parallel to the laminating direction,
the cathode side end plate has a first gas inlet port configured to take in a gas containing an oxidizing agent from outside, on the second side surface,
the anode side end plate has a first fuel outlet port configured to exhaust at least any of a reaction product of the fuel or a reaction residue of the fuel, on the second side surface,
the fuel cell system further comprises:
an integrated member formed by integrating the gas discharging section of the gas supply section and a receiver section configured to receive exhaust from the first fuel outlet port, and
a third seal member separating the first gas inlet port from the first fuel outlet port, connecting the gas discharging section to the first gas inlet port, and connecting the receiver section to the first fuel outlet port.

13. The fuel cell system according to claim 12,
wherein the membrane electrode assembly is one of membrane electrode assemblies, the fuel cell stack comprises the membrane electrode assemblies, and a separator is provided between each two of the membrane electrode assemblies to form a cell stack,
the separator has a second plane portion formed larger in the laminating direction than a thickness of a portion in which the separator is sandwiched by the membrane electrode assemblies on the first side surface so as to correspond to the anode electrode of each of the membrane electrode assemblies,
the second plane portion is provided with a second fuel inlet port configured to take in the fuel from outside,
the separator has a second gas inlet port configured to take in the gas from outside on the second side surface so as to correspond to the cathode electrode of each of the membrane electrode assemblies,
the fuel supply section is configured to supply the fuel to the first fuel inlet port and the second fuel inlet port,
the gas supply section is configured to supply the gas to the first gas inlet port and the second gas inlet port,
the separator has a second fuel outlet port configured to exhaust at least any of a reaction product of the fuel and a reaction residue of the fuel on the second side surface,
the integrated member is formed by integrating the gas discharging section of the gas supply section and a receiver section configured to receive exhaust from the first and second fuel outlet ports,
the third seal member is configured to separate the first and second gas inlet ports from the first and second fuel outlet ports, connect the gas discharging section to the first and second gas inlet ports, and connect the receiver section to the first and second fuel outlet ports.
